# EUROPEAN PATENT APPLICATION

(11) **EP 1 662 432 A2**
(43) Date of publication of application: **31.05.2006**
(21) Application number: 05257378.9
(22) Date of filing: 30.11.2005
(51) Int. Cl.: G06Q 10/00

(54) **Web based data collaboration tool**

(30) Priority: 30.11.2004 US 999907
(71) Applicant: UNITED TECHNOLOGIES CORPORATION, Hartford, CT 06101 (US)
(72) Inventor: Fite, William R., Manchester Connecticut 06040 (US); Vogel, Raymond W., New London Connecticut 06320 (US); Reinhart, Ronald J., Niantic Connecticut 06357 (US); Brodersen, Andrew N., Coventry Connecticut 06238 (US); Svechkova, Maria I., Glastonbury Connecticut 06033 (US)
(74) Representative: Leckey, David Herbert

(57) **Abstract**

A web based data collaboration tool includes a dynamic international collaborative environment in which system partners, including customers, technology partners and suppliers, can exchange information between one another in a truly collaborative environment. The web based data collaboration tool includes unique "fine grain" security at both the document and sub-document level. This allows one source document to be shared between the system partners, including partners from different companies and those located in different countries, based upon an individual document/sub-document security profile. Further, the web based data collaboration tool includes a secure "Sandbox" for peer-to-peer sharing of sensitive documents and electronically incorporates a business area export representative (BAER) approval process that includes the required retention of International Traffic in Arms Regulations (ITAR) documents making the web based data collaboration tool fully ITAR compliant.

## Description

### BACKGROUND OF THE INVENTION

This application relates generally to a web based data collaboration tool, and more particularly to an interactive web based data exchange that incorporates "fine grain" security at a document and sub-document level, a secure environment for peer-to-peer sharing of sensitive documents, and is fully compliant with the International Traffic in Arms Regulations (ITAR).

Web based information sharing systems are utilized to share information between multiple groups. Known systems typically include a secure server that provides private areas known as directories for each system partner to upload and/or download information. System security is based at a directory level with each system partner or company, having its own company directory. Individual users within the same system partner or company may have access only to information stored in their own corresponding system partner or company directory. However, partner companies themselves cannot interactively share documents with other partner companies. If a particular document requires sharing with more than one system partner or company, a system manager must place a copy of the document in each partner company's directory. This can result multiple different versions of the same document being stored on the web-based information sharing system. This creates a major configuration management problem and eliminates the possibility for truly collaborative environment between partner companies.

Further, in known systems, secure communication between individual users at each of the partner companies requires the use of encrypted email. This requirement creates a burden that limits the amount of communication and increases the possibility of security escapes.

Finally, some communications are subject to the International Traffic in Arms Regulations (ITAR). Under ITAR, some services and related technical data are designated as defense articles and defense services and are subject to the Arms Export Control Act (22 U.S.C. §§ 2778 and 2794(7)). Communications subject to this act require review and approval of a Business Area Export Representative (BAER) prior to dissemination. In known systems, BAER approval is a manual process that is extremely time intensive, in some cases taking thirty (30) days to complete.

Therefore, known web based information sharing systems include restrictive security systems that only allow a collaboration between individual users within the same partner company, require the use of encrypted email for secure communication, and are not ITAR compliant. As such, it is desirable to provide a web based data collaboration tool that includes "fine grain" security at the document level that allows a truly collaborative environment not only between individual users within the same partner company but also between the partner companies themselves, provides a secure peer-to-peer sharing capability, and is fully ITAR compliant.

### SUMMARY OF THE INVENTION

A web based data collaboration tool is disclosed in the present invention. The web based data collaboration tool includes a dynamic international collaborative environment in which system partners, including customers, technology partners and suppliers, can exchange information between one another in a truly collaborative environment. The web based data collaboration tool includes unique "fine grain" security at both the document and sub-document level. This allows one source document to be shared between the system partners based upon an individual document/sub-document security profile. Further, the web based data collaboration tool includes a secure "Sandbox" for peer-to-peer sharing of sensitive documents and electronically incorporates the BAER workflow approval process including the required retention of ITAR documents making the web based data collaboration tool fully ITAR compliant.

The web based data collaboration tool of the present invention also includes a coordinated memo capability that tracks workflow and associated embedded action item(s) within a single coordinated memo, allows for large file transfer, and has a batch upload capability. Further, the web based data collection tool of the present invention includes a document version control in which individual documents are "checked-out" for modification and subsequently "checked-in." During modification, the tool identifies the individual user who has the document checked out and allows other individual users "read-only" access.

In addition, the web based data collaboration tool of the present invention includes business tools such as, Morning Story, Management Dashboard, Initial Flight Release (IFR), and Request for Action (RFA). Morning Story permits individual users to view a basic daily engine status while restricting visibility to detailed reports to selected system partners. Management Dashboard permits individual users to view overall program status while restricting visibility of detailed reports to selected system partners and permits administrators to add icons and reports as necessary. IFR incorporates a dynamic resource management tool to verify all project requirements and manage the dynamic workflow through customer approval. Finally, RFA tracks actions throughout the IFR and other internal processes, including workflow, which requires customer approval.

These and other features of the present invention can be best understood from the following specification and drawings, the following of which is a brief description.

### BRIEF DESCRIPTION OF THE DRAWINGS

Figure 1 schematically illustrates a web-based data collaboration tool of the present invention.
Figure 2 schematically illustrates a fine-grain security system of the web-based data collaboration tool of the present invention at an individual document level.
Figure 3 schematically illustrates a fine-grain security system of the web-based data collaboration tool of the present invention in a secure sandbox environment.

### DETAILED DESCRIPTION OF THE PREFERRED EMBODIMENT

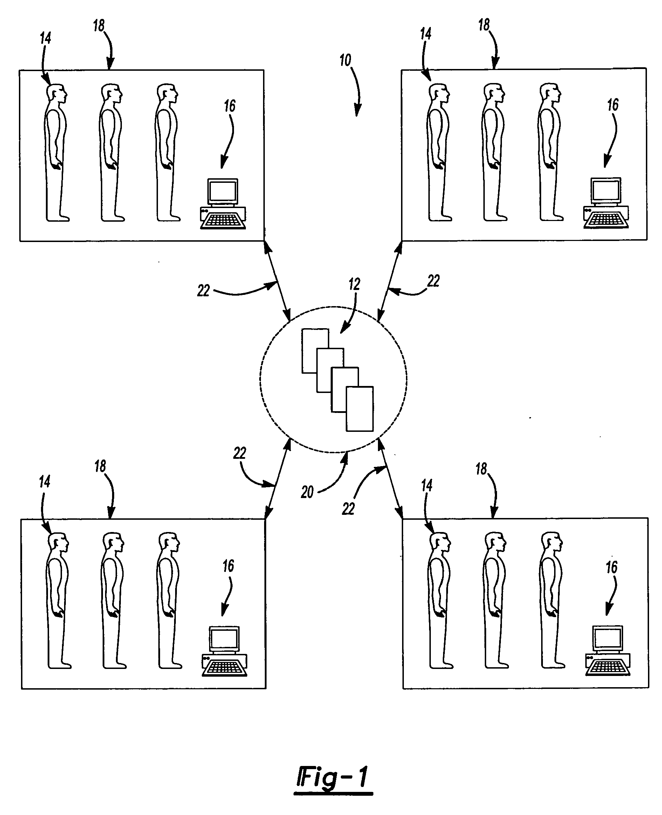

Figure 1 schematically illustrates one embodiment of a web-based data collaboration tool 10 of the present invention that includes a plurality of documents 12 accessible by a plurality of users 14 remotely located from one another through a web-based interface 16. The users 14 can be located at different partner companies 18 and in different countries. A security system 20 controls access 22 to each of these documents 12 based upon a document share list and a document classification both of which are established by a document owner when the document 12 is imported.

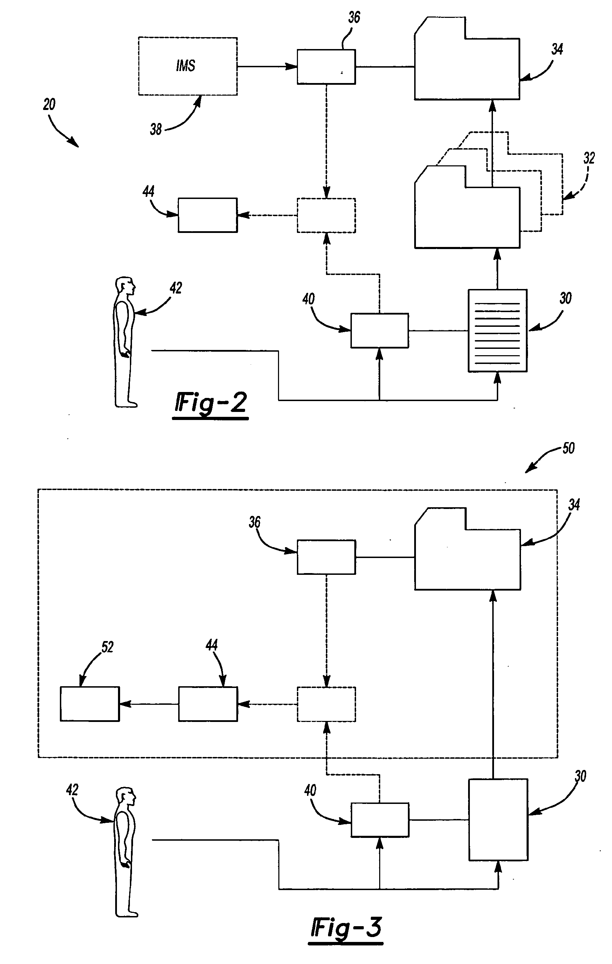

As schematically illustrate in Figure 2, a document 30 is imported into a sub-folder 32 wherein the sub-folder 32 is subordinate to a level-one folder 34. In one example, a level-one folder might be allocated to total cost management and contain all document pertaining to a program, while an associated sub-folder may include documents related to the costs associated with only one individual program component. Each level-one folder 34 may have multiple sub-folders 32 that are subordinate to the level-one folder 34. Further, each level-one folder 34 has an associated level-one folder access control list 36. The level-one folder access control list 36 is generated by an identity management system 38 from a plurality of user profiles created during a universal registration process discussed in further detail below. Finally, each document 30 imported into a sub-folder 32 has a document share list 40 associated with it.

To obtain access to the web-based data collaboration tool 10, each user must create a user profile through a universal registration process in which the user must enter at the least their name and the name of their corporate partner. In addition, the user must select a user nationality, that is, whether he is a United States National or a Foreign National. Based upon the information stored in the user profile, an identity management system grants access to appropriate level-one folders 34. This means the identity management system includes the user on the appropriate level-one folder's access control lists, and assigns a role to each user.

This role determines what each user can do to a document. For example, if a user 14 is assigned a view role, the user can only view or download documents. Other roles include, but are not limited to, edit and update roles. The edit role allows the user to import, view, download and update documents, while the update role allows the user to import, view, download, update and delete documents. Once the user has obtained access through the identity management system, the user may view, download, import, update and/or delete documents based upon the role assigned to each user during the universal registration process.

When a document 30 is imported into the web-based data collaboration tool 10, a document importer 42, which may or may not be a document owner, goes through an importing process that includes but is not limited to selecting which system partners the document 30 is to be shared with, and selecting a document classification which includes flagging whether or not the document 30 includes technical military data. These two criteria make up the document share list 40 for the document 30. The document share list 40 is then used to define a sub-set of the level-one access control list 36 to which access to the document 30 may be granted.

The web-based data collaboration tool 10 searches for existing system access control lists and compares the existing system access control list to the sub-set requirements. If a system access control list exists that meets the sub-set requirements, the web-based data collaboration tool 10 associates that system access control list to the document. If, however, a system access control list based upon the sub-set requirement does not exist, the web-based data collaboration tool 10 generates a private access control list to meet the sub-set requirements and associates the private access control list with the document. All private access control lists are then converted to new system access control lists on a daily basis.

The web-based data collaboration tool 10 of the present invention also includes a "check-in"/"check-out" process. The "check-in"/"check-out" process allows a user to "check-out" a document imported by an importing user if that user is an authorized user. An authorized used is a user who is allowed access based upon the access control list associated with the document desired to be "checked-in" or "checked-out." When a document in "checked-out," the web-based data collaboration tool 10 provides notification to other authorized users that the document is "checked-out" and also identifies who "checked-out" the document 30. Whether a document can be "checked-in"/"checked-out" and whether or not a check-out user may edit the "checked-out" document is controlled by the role assigned to the check-out user during the universal registration process.

The web-based data collaboration tool 10 of the present invention also includes a coordination memo tool in which users can exchange information or initiate requests for action. All exchanges of information, requests for action and their associated workflows are formally tracked by the coordination memo tool. In addition, the coordination memo tool includes but is not limited to a management approval process and a business area export representative (BAER) approval process.

Coordination memos initiated by a user require approval of the user's corporate system partner prior to dissemination of the document to other system partners external to the user's corporation and require further approval through the BAER approval process discussed below, prior to dissemination to Foreign Nationals. A Foreign National is a user located at a system partner or company corresponding facility resides in a country other than the United States of America.

A management approval process is electronically initiated within a corporate partner when a user either imports a new document or modifies an existing document, and that document requires dissemination to other system partners. The management approval process requires a minimum of two distinct approvals. A coordinated memo is created in a coordinated memo folder, which is a level-one folder having an associated level-one access control list as previously discussed above. The coordinated memo is initiated by a user and then is transmitted to a first approver for approval. If approved, the coordinated memo is then transmitted to a second approver for approval. If approved, and if the coordination memo does not require any additional management approvals, the coordination memo is evaluated to determine if dissemination to Foreign Nationals is required and is evaluated to determine if the coordinated memo includes technical military data. If none of these are true, the coordination memo is released for dissemination. However, if the coordination memo requires dissemination to Foreign Nationals and includes technical military data, the coordination memo must go through the BAER approval process prior to dissemination to the Foreign Nationals discussed below.

A coordinated memo may be sent back to the initiating user at any point in the management approval process with instructions that modifications are required. However, each time the coordinated memo is modified the entire management approval process is restarted. In addition, the initiating user may abort the management approval process at any point in the process prior to final approval. However, once the process is complete, the coordinated memo can only be deleted by those users having an update role associated with the coordination memo folder in question.

The BAER approval process in initiated when the document classification is flagged as including military technical data and when access to the document is required by Foreign Nationals. If these two criteria are met, the document must be approved by a business area export representative (BAER) prior to dissemination to the Foreign Nationals. When a document includes a document share list that includes Foreign Nationals and the document is also flagged as including military technical data, the importing user must select an appropriate BAER group. Upon selection, the BAER approval process is initiated.

First, an email is automatically generated and sent to the selected BAER group and the document is placed in an inbox associated with the selected BAER group. A BAER group member then acquires the document from the BAER group inbox. The document is removed from the BAER group inbox and placed in the BAER group member inbox. The BAER group member then reviews the document, making modifications where appropriate, and then decides whether to reject or approve the document for dissemination to Foreign Nationals. If the document is approved, the BAER group member selects or adds the appropriate export license number, and the document then becomes viewable by the full document share list including Foreign Nationals. However, if the document is rejected, the document is sent back to the importing user for update and then reinitiates the BAER approval process and access remains restricted to United States Nationals only. Therefore, access to the flagged document will be restricted to United States Nationals only until the BAER approval process is complete.

The web-based data collaboration tool 10 also includes a secure sandbox environment 50, as shown in Figure 3, for peer-to-peer sharing of sensitive documents. The secure sandbox environment 50 is a level-one folder 34 that does not have any subordinate sub-folders 32, as previously illustrated in Figure 2. Instead, a document 30, including its associated document share list 40, is directly imported to the secure sandbox environment 50 by an importing user 42. As a level-one folder 34, the secure sandbox environment 50 also has an associated level-one folder access control list 36 that cooperates with the document share list 40 associated with the imported document 30 to generate an access control list 44. However, once the access control list 44 is generated, the importing user 42 has the option to further restrict access to selected individuals within the access control list 44, creating a selected user access control list 52. As such, the secure sandbox environment 50 provides a secure environment for selected users to share a particular document without the necessity of encrypted email.

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A web-based data exchange tool comprising:
a plurality of documents accessible by a plurality of users remotely located from one another through a web-based interface; and
a security system wherein access to each document is determined based on a combination including at least a document share list and a document classification, and wherein access to each document is controlled at a document level.

2. The web-based data exchange tool as recited in Claim 1, including at least one sub-folder accessible through said web-based interface wherein an importing user defines said document share list and associates said document share list with an individual document upon upload of said individual document to said sub-folder.

3. The web-based data exchange tool as recited in Claim 2, wherein said document share list includes at least one user entity for document sharing and at least one sharing nationality.

4. The web-based data exchange tool as recited in Claim 3, wherein said at least one sharing nationality comprises only one of United States Nationals or a combination of United States Nationals and Foreign Nationals.

5. The web-based data exchange tool as recited in Claim 3, including at least one level-one folder wherein said sub-folder is subordinate to said level-one folder with access to said level-one folder being controlled by a level-one folder access control list.

6. The web-based data exchange tool as recited in Claim 5, further including a document access control list generated based upon said level-one folder access control list and said document share list, wherein said document access control list includes at least a sub-set of users from said level-one folder access control list and wherein said document access control list allows access to individual users in said sub-set of users.

7. The web-based data exchange tool as recited in Claim 6, further including a plurality of existing system access control lists stored by said web-based data exchange tool, wherein said document access control list is compared with said existing system access control lists to determine if any of said plurality of existing system access control lists is equivalent to said document access control list.

8. The web-based data exchange tool as recited in Claim 7, wherein one of said plurality of existing system access control lists is equivalent to said document access control list, wherein said equivalent existing system access control list is associated with said document.

9. The web-based data exchange tool as recited in Claim 8, wherein none of said plurality of existing system access control lists is equivalent to said document access control list resulting in said document access control list becoming a personal access control list wherein said personal access control list is associated with said document.

10. The web-based data exchange tool as recited in Claim 9, wherein said personal access control list is converted into a system access control list and said system access control list is stored by said web-based data exchange tool as one of said plurality of existing system access control lists.

11. The web-based data exchange tool as recited in any preceding Claim, wherein said plurality of individual users are selected from criteria stored in a plurality of user profiles.

12. The web-based data exchange tool as recited in Claim 11, wherein each individual user creates an associated user profile during a universal registration process and wherein each of said plurality of user profiles includes a user entity name and a user nationality.

13. The web-based data exchange tool as recited in Claim 12, wherein each of said plurality of individual users is assigned a role during said universal registration process.

14. The web-based data exchange tool as recited in Claim 13, wherein said role determines a document access type.

15. The web-based data exchange tool as recited in Claim 14, wherein said user nationality includes a foreign national designation and said document classification includes at least one class comprising military technical data, said security system further including an automated business area export representative approval process to approve access to said military technical data based upon said foreign national designation.

16. The web-based data exchange tool as recited in Claim 15, wherein access is denied to said foreign national designation until said automated business area representative approval process is complete.

17. The web-based data exchange tool as recited in Claim 16, wherein said automated business area representative approval process maintains a record of export approval.

18. The web-based data exchange tool as recited in any preceding Claim, further including a secure sandbox environment comprising a level-one folder associated with a level-one folder access control list wherein an importing user imports a document into said secure sandbox environment and wherein said importing user can further restrict access to said document to a sub-set of individual users within said associated level-one folder access control list.

19. The web-based data exchange tool as recited in any preceding Claim, further including a coordination memo tool allowing each of said plurality of users to exchange documents and initiate requests for action wherein workflows associated with said exchange of documents and said requests for action are tracked and stored within said web-based data exchange tool.

20. The web-based data exchange tool as recited in Claim 19, wherein said coordination memo tool further includes a workflow approval process, wherein each of said documents requires at least two distinct approvals from within a workplace entity associated with an importing user prior to dissemination of each document to users external to said workplace entity associated with said importing user.

21. The web-based data exchange tool as recited in Claim 20, wherein said document classification comprises a plurality of classes including at least technical military data, and wherein said at least two distinct approvals includes a business area export representative approval prior to dissemination of said document to users classified as foreign nationals when said document classification is classified as including technical military data.

22. The web-based data exchange tool as recited in any preceding Claim, further including a data management tool comprising a report document including a summary portion and a detailed portion and wherein an access control list restricts visibility to said detailed portion.

23. A method of web-based data exchange comprising the steps of:
importing at least one document into an exchange environment; and
controlling access to the document based on a combination including at least a level-one folder access control list, a document share list and a document classification.

24. The method as recited in Claim 23, further including the steps of:
establishing a plurality of user profiles; and
creating the document share list based upon the user profiles.

25. The method as recited in Claim 24, wherein said step of establishing the plurality of user profiles further includes the steps of:
entering an entity name; and
entering a user nationality for each user.

26. The method as recited in Claim 25, wherein said step of creating the document share list further includes the steps of:
selecting at least one entity name for document sharing; and
selecting at least one user nationality to be included in the document sharing.

27. The method as recited in Claim 26, further including generating a document access control list based upon the level-one folder access control list and the document share list.

28. The method as recited in Claim 27, further including the steps of:
setting a technical military data flag when a document includes technical military data; and
controlling access to the document based upon the technical military data flag.

29. The method as recited in Claim 28, wherein said step of controlling access based upon the technical military data flag further includes initiating an automated business area export representative approval process when the technical military data flag is set to yes.

30. The method as recited in Claim 29, wherein access to the document is denied to foreign nationals until the business area export representative approval process is complete.

31. The method as recited in any of Claims 23 to 30, further including a secure sandbox environment comprising a level-one folder associated with a level-one folder access control list; wherein an importing user imports a document into the secure sandbox environment and wherein the importing user can further restrict access to the document to individual users within a sub-set of users generated from the level-one folder access control list and the document share list.

32. The method as recited in any of Claims 23 to 31, wherein the associated level-one folder access control list is created by a system administrator proximate to creation of the level-one folder.

33. The method as recited in any of Claims 23 to 32, wherein the document classification includes at least one class comprising military technical data.
